Europäisches Patentamt

European Patent Office

Office européen des brevets

(19)

(11) Publication number: 0 393 945
A2

# EUROPEAN PATENT APPLICATION

(12)

(21) Application number: 90304008.7

(22) Date of filing: 12.04.90

(51) Int. Cl.5: H04N 3/15

(30) Priority: 17.04.89 JP 96791/89

(43) Date of publication of application:
24.10.90 Bulletin 90/43

(84) Designated Contracting States:
DE FR GB

(71) Applicant: SEIKO INSTRUMENTS INC.
31-1, Kameido 6-chome Koto-ku
Tokyo 136(JP)

(72) Inventor: Kawahara, Yukito
c/o Seiko Instruments Inc., 31-1 Kameido
6-chome
Koto-ku, Tokyo(JP)
Inventor: Machida, Satoshi
c/o Seiko Instruments Inc., 31-1 Kameido
6-chome
Koto-ku, Tokyo(JP)
Inventor: Mukainakano, Hiroshi
c/o Seiko Instruments Inc., 31-1 Kameido
6-chome
Koto-ku, Tokyo(JP)

(74) Representative: Caro, William Egerton et al
J. MILLER & CO. Lincoln House 296-302 High
Holborn
London WC1V 7JH(GB)

(54) Linear image sensor.

(57) A linear image sensor has a plurality of photo-electric conversion elements ($S_{2n}$, $S_{2n+1}$ ...) for detecting image information, a corresponding plurality of switching elements ($SW_{2n}$, $SW_{2n+1}$ ...), each for reading out an image detection signal from a respective one of the photo-electric conversion elements, and a scanning circuit (SC) for sequentially driving the switching elements. A first common signal line ($SL_1$) is arranged to deliver image detection signals from odd numbered ones of the switching elements to a signal output (SIG}, and a second common signal line ($SL_2$) is arranged to deliver image detection signals from even numbered ones of the switching elements to the signal output. A first re-set gate ($RG_1$) connected to the first common signal line is operable to re-set the odd numbered photo-electric conversion elements through the associated switching elements, and a second re-set gate ($RG_2$) connected to the second common signal line is arranged to re-set the even numbered photo-electric conversion elements through the associated switching elements.

FIG. 1

# LINEAR IMAGE SENSOR

The present invention relates to a linear image sensor suitable for use in an image scanner to effect reading of an image, for example in a facsimile machine for transmitting image information or in a desk top publishing machine.

Recently, various types of information processing apparatus, such as a facsimile machine for transmitting image information and a desk top publishing machine for editing images, have been marketed. In order to expand the market for consumer use, the cost of the image sensor used in such apparatus needs to be reduced.

In particular, the demand for cost reduction increases the more widespread becomes the use of image information processing apparatus. Especially, it is desirable to reduce the cost of the image sensor, which constitutes the image information input unit of such apparatus.

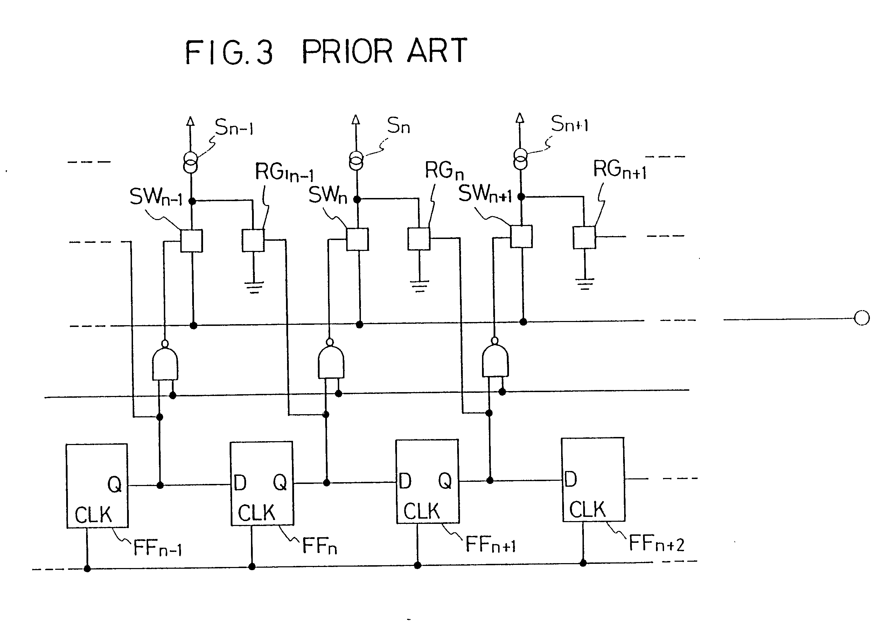

A known image sensor is shown in Figure 3, and comprises a plurality of photo-electric conversion elements $S_n$, $S_{n+1}$ ... for converting image information into electrical signals, a plurality of switching elements $SW_n$, $SW_{n+1}$ ... for outputting the electrical signals obtained from the respective photo-electric conversion elements, a plurality of re-set gate elements $RG_n$, $RG_{n+1}$ ..., each coupled to a respective photo-electric conversion element for re-setting the same to an initial state after the electrical signal representative of image information has been output, and a scanning circuit composed of flip flops $FF_n$, $FF_{n+1}$ ... for sequentially driving the switching elements through associated gates and the re-set gate elements.

It is an object of the present invention in its preferred form described below to provide a linear image sensor at a lower cost than the above known image sensor, for use in an image scanner as an image information input device for a facsimile machine, for example.

According to the present invention, there is provided a linear image sensor having a plurality of photo-electric conversion elements for detecting image information, a corresponding plurality of switching elements, each for reading out an image detection signal from a respective one of the photo-electric conversion elements, and a scanning circuit for sequentially driving the switching elements, and characterised by a first common signal line for delivering the image detection signals from odd numbered ones of the switching elements to a signal output, and a second common signal line for delivering the image detection signals from even numbered ones of the switching elements to the signal output.

In the preferred embodiment, one re-set gate circuit is provided for re-setting odd numbered ones of the photo-electric conversion elements to an initial state through the corresponding switching elements and the first common signal line, and another re-set gate circuit is provided for re-setting even numbered ones of the photo-electric conversion elements to an initial state through the corresponding switching elements and the second common signal line. This is in contrast to the prior art, in which each respective photo-electric conversion element is individually re-set by a corresponding re-set gate element.

Further, in the preferred embodiment, the scanning circuit for controlling the switching elements comprises a shift register arranged such that an output signal from each bit of the shift register is applied directly as a control signal to an associated one of the switching elements.

These preferred features are possible in that output terminals of the odd numbered switching elements and of the even numbered switching elements are separated from each other, the two divided groups each being connected to the respective common signal line so as to output signals alternately on the two common signal lines.

Thus, the conventional re-set gate elements provided in the prior art and corresponding in number to the photo-electric conversion elements can be replaced by a pair of re-set gate circuits in the present invention. Further, the output signal of each bit of the shift register of the scanning circuit can be applied directly as a control signal for controlling each switching element, rather than indirectly as in the prior art.

The invention is described further, by way of example, with reference to the accompanying drawings, in which:-

Figure 1 is a schematic circuit diagram of an image sensor according to the present invention;

Figure 2 is a timing chart for illustrating the timing of control signals in the image sensor of Figure 1; and

Figure 3 is a schematic circuit diagram of a conventional image sensor.

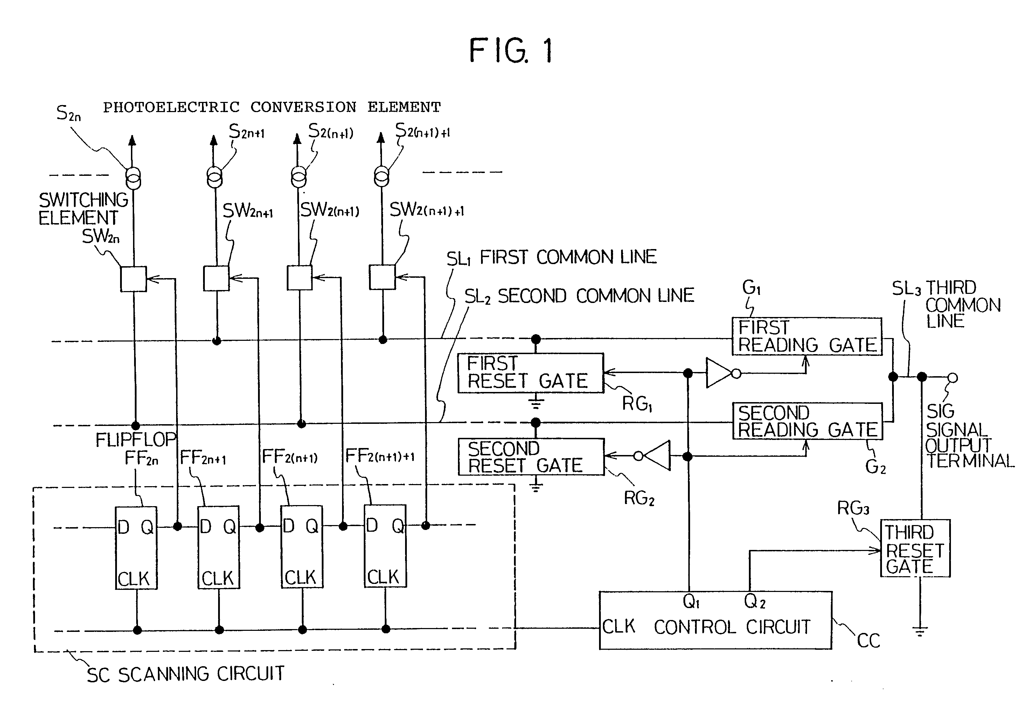

One embodiment of the present invention is shown in Figure 1, which is schematic diagram of an image sensor according to the present invention. The image sensor comprises a plurality of photo-electric conversion elements $S_{2n}$, $S_{2n+1}$ ..., each having an output terminal connected to an input terminal of a corresponding switching element $SW_{2n}$, $SW_{2n+1}$ ... An output terminal of each of the odd numbered switching elements $SW_{2n+1}$, $S_{2n+3}$ ... is connected to a first common connecting line or signal line $SL_1$, while an output terminal of each of the even numbered switching elements $SW_{2n}$, $SW_{2n+2}$ ... is connected to a second common connecting line or signal line $SL_2$. The first common connecting line $SL_1$ is connected to an input terminal of a first reading gate circuit $G_1$ and to an input terminal of a first re-set gate circuit $RG_1$, and the second common connecting line $SL_2$ is connected to an input terminal of a second reading gate circuit $G_2$ and to an input terminal of a second re-set gate circuit $RG_2$. Output terminals of the first and second reading gate circuits $G_1$ and $G_2$ are directly coupled to each other and are connected commonly to a third common connecting line $SL_3$. The third common connecting line $SL_3$ is connected between a signal output terminal SIG to external circuitry and an input terminal of a third reset gate circuit $RG_3$. Respective output terminals of the first, second and third re-set gate circuits $RG_1$, $RG_2$ and $RG_3$ are connected to a re-set power source, in the form of the ground GND in this circuit, which supplies a re-set potential.

Control signals are supplied from an output terminal Q of each of a plurality of flip flops $FF_{2n}$, $FF_{2n+1}$ which constitute the stages or bits of a shift register of a scanning circuit SC. In particular, the output terminal Q of the ith stage (i = 2n, 2n + 1 ...) flip flop $FF_i$ is connected to a control terminal of the ith switching element $SW_i$. Further, a control circuit CC is provided for controlling various of the circuit elements. The control circuit CC has a clock terminal CLK, a first output terminal $Q_1$ connected directly to control terminals of the first re-set gate circuit $RG_1$ and the second reading gate circuit $G_2$, and through an inverter to control terminals of the first reading gate circuit $G_1$ and the second re-set gate circuit $RG_2$, and a second output terminal $Q_2$ connected to a control terminal of the third re-set gate circuit $RG_3$.

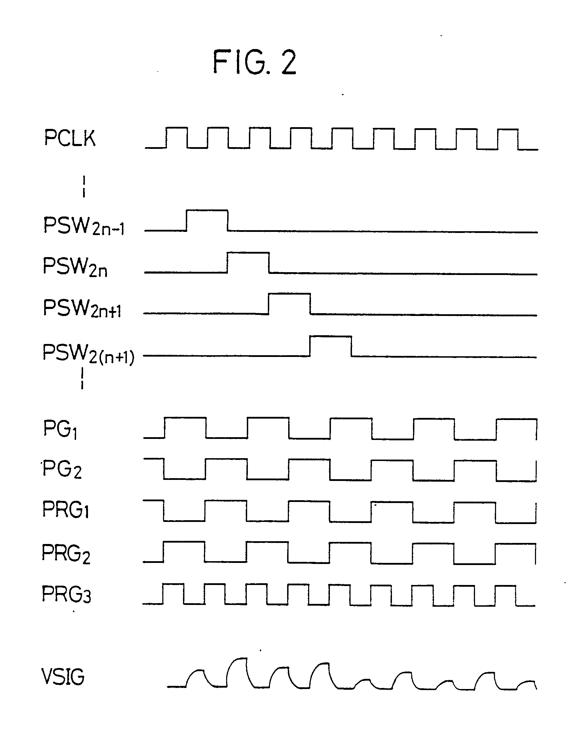

The operation of the above circuit is described below in conjunction with the timing chart shown in Figure 2.

In Figure 2, a waveform PCLK represents a clock pulse train which is applied to the flip flops $FF_{2n}$, $FF_{2n+1}$ ... and to the clock terminal CLK of the control circuit CC. A waveform $PSW_i$ (i = 2n, 2n + 1 ...) represents a control or scanning pulse signal supplied from the flip flop $FF_i$ and effective to control the ith switching element. A waveform $PG_j$ (j = 1,2) represents a control signal effective to control the jth reading gate circuit $G_j$, being fed to its control terminal from the control circuit CC, and a waveform $PRG_k$ (k = 1, 2, 3) represents a control signal effective to control the kth re-set gate circuit $RG_k$ and fed to its control terminal from the control circuit CC. Each of the control signals $PSW_i$, $PG_j$ and $PRG_k$ is effective at its high level to turn on the respective associated switching element $SW_i$, reading gate circuit $G_j$ and re-set gate

circuit $RG_k$, to maintain a conductive state between the input and output terminal of the same, and is effective at its low level to turn off the respective associated element or circuit to maintain the same in a non-conductive state.

Therefore, the pair of reading gate circuits $G_1$ and $G_2$ are rendered alternately conductive and non-conductive in opposite phase relation to each other. Further, the first reading gate circuit $G_1$ and the first re-set gate circuit $RG_1$ are rendered alternately conductive and non-conductive in opposite phase relation to each other. In a similar manner, the second reading gate circuit $G_2$ and the second re-set gate circuit $RG_2$ are alternately turned on and off in opposite phase relation to each other. The third re-set gate circuit $RG_3$ switches between the conductive and non-conductive states generally in synchronisation with the clock pulse signal PCLK.

The switching element $SW_i$, reading gate circuit $G_j$ and re-set gate circuit $RG_k$ are each held in their conductive states for a duration corresponding to one period of the clock pulse signal PCLK. With regard to the timing of switching between the conductive and non-conductive states, the switching element $SW_i$ effects the switching or transition of the states in response to a trailing edge of the clock pulse signal PCLK, and the reading gate circuit $G_j$ and re-set gate circuit $PG_k$ effect their switching or transition in response to a leading edge of the clock pulse signal.

Next, a description is given of the process for sequentially reading out image detection signals obtained from the plural photo-electric conversion elements $S_i$ (i = 2n, 2n + 1 ...).

Firstly, the scanning circuit SC is supplied with a train of binary bit data (100 ... 0), having a bit number greater than that of the shift register composed of the flip flops $FF_{2n}$, $FF_{2n+1}$ ..., in synchronisation with the clock pulse signal PCLK so that the train of binary bit data is shifted through the shift register to produce the control signals $PSW_i$ effective sequentially to turn on the plural switching elements $SW_i$. Then, an image detection signal produced, for example, by the odd numbered photo-electric conversion element $S_{2n+1}$ is read out by way of the (2n + 1)th switching element $SW_{2n+1}$ to the first common connecting line $SL_1$. More especially, after the first reading gate circuit $G_1$ is turned on in response to a leading edge of the clock pulse signal PCLK, the (2n + 1)th switching element $SW_{2n+1}$ is turned on in response to the following trailing edge of the clock pulse signal to feed the corresponding image detection signal to the first common connecting line $SL_1$. At this time, since the second reading gate circuit $G_2$, first re-set gate circuit $RG_1$, and third re-set gate circuit $RG_3$ are turned off, the photo-electric detection signal is read out from the $(2n+1)$th photo-electric conversion element $S_{2n+1}$ through the switching element $SW_{2n+1}$, the first common connecting line $SL_1$, the first reading gate circuit $G_1$ and the third common connecting line $SL_3$ to the signal output terminal SIG. Thereafter, the first reading gate circuit $G_1$ is turned off in response to the next leading edge of the clock pulse signal PCLK. Concurrently, the second gate circuit $G_2$ and the first re-set gate circuit $RG_1$ are turned on, and the third re-set gate circuit $RG_3$ is also brought into the conductive state. At this time, since the $(2n+1)$th switching element $SW_{2n+1}$ is still held in the conductive state, the $(2n+1)$th photo-electric conversion element $S_{2n+1}$ is connected to the re-set potential source by the first re-set gate circuit $RG_1$ and is accordingly re-set thereby through the switching element $SW_{2n+1}$ and the first common connecting line $SL_1$. Further at this time, since the next $(2n+2)$th switching element $SW_{2n+2}$ is still held in the non-conductive state, the next image detection signal is not yet fed to the second common connecting line $SL_2$ from the next even numbered $(2n+2)$th photo-electric conversion element $S_{2n+2}$. Accordingly, the signal output terminal SIG is held at the re-set potential, since the third re-set gate circuit $RG_3$ is held in the conductive state.

Then, when the following trailing edge occurs in the clock pulse signal PCLK, the $(2n+1)$th switching element $SW_{2n+1}$ is changed to the non-conductive state so that the corresponding photo-electric conversion element $S_{2n+1}$ is released from the re-set state and initiates photo-electric conversion to store electric charge.

On the other hand, the succeeding $(2n+2)$th switching element $SW_{2n+2}$ is turned on, and the third re-set gate circuit $RG_3$ is changed to the non-conductive state immediately before the turning on of the switching element $SW_{2n+2}$. Therefore, the image detection signal obtained from the $(2n+2)$th photo-electric conversion element $S_{2n+2}$ is fed to the signal output terminal SIG through the corresponding switching element $SW_{2n+2}$, the second common connecting line $SL_2$, the second reading gate circuit $G_2$ and the third common connecting line $SL_3$.

By repeatedly carrying out the above described sequence, the image detection signals can be successively read out from the plural photo-electric conversion elements.

It is to be noted that when each switching element $SW_i$ is switched from the non-conductive state to the conductive state so as to read out the corresponding image detection signal, the reading gate circuit $G_1$ or $G_2$ is held in a stable state. Therefore, switching noise of the reading gate circuit is not superposed on the photo-electric detection signal, thereby avoiding a reduction of S/N ratio.

According to the present invention, the number of re-setting components for use in re-setting of each of the photo-electric conversion elements is reduced by comparison with the known sensor shown in Figure 3. The number of components in the scanning circuit may also be reduced, thereby reducing the size of the image sensor chip. Generally, the number $m$ of photo-electric conversion elements is comparable to the number of stages in the shift register in the scanning circuit, and the number $m$ ranges from several tens to several thousands. Therefore, a huge number of components may be eliminated effectively according to the present invention. While simplifying the structure of the scanning circuit, leakage of photo-electric charge can be avoided between the adjacent photo-electric conversion elements. Moreover, switching noise is not caused when switching the gate circuits between the odd numbered and even numbered photo-electric conversion elements, thereby obtaining image signals of good quality. Further, by reducing the size of chip, the image sensor can be produced at a low cost.

## Claims

1. A linear image sensor having a plurality of photo-electric conversion elements ($S_{2n}$, $S_{2n+1}$ ...) for detecting image information, a corresponding plurality of switching elements ($SW_{2n}$, $SW_{2n+1}$ ...), each for reading out an image detection signal from a respective one of the photo-electric conversion elements, and a scanning circuit (SC) for sequentially driving the switching elements, and characterised by a first common signal line ($SL_1$) for delivering the image detection signals from odd numbered ones of the switching elements to a signal output (SIG), and a second common signal line ($SL_2$) for delivering the image detection signals from even numbered ones of the switching elements to the signal output.

2. An image sensor according to claim 1 characterised by a first re-set gate ($RG_1$) connected to the first common signal line, a second re-set gate ($RG_2$) connected to the second common signal line, and means (CC) for operating the re-set gates alternately for resetting the associated switching elements.

3. An image sensor according to claim 1 or 2 characterised by a first reading gate ($G_1$) connected between the first common signal line and the signal output, a second reading gate ($G_2$) connected between the second common signal line and the signal output, and means (CC) for operating the reading gates alternately so as to deliver the image detection signal sequentially to the signal output.

4. An image sensor according to claims 2 and 3 characterised in that the operating means comprise a control circuit, which is further arranged to operate the first re-set gate and the first reading gate alternately and to operate the second re-set gate and the second reading gate alternately.

5. An image sensor according to claim 4 characterised by a third re-set gate ($RG_3$) connected to the signal output and operable by the control circuit for intermittently re-setting the signal output in synchronisation with the sequential delivery of the image detection signals to the signal output.

6. An image sensor according to any preceding claim characterised in that the scanning circuit comprises a shift register having a plurality of flip flops ($FF_{2n}$, $FF_{2n+1}$, ...), and in that each of the flip flops is directly connected to a corresponding one of the switching elements.

7. In an image sensor of the linear type having a plurality of photo-electric conversion elements ($S_{2n}$, $S_{2n+1}$, ...) arranged linearly on a semi-conductor substrate for detecting image information, switching elements ($SW_{2n}$, $SW_{2n+1}$, ...) each having an input terminal connected to each photo-electric conversion element and an output terminal for reading out a detection signal produced from the corresponding photo-electric conversion element, and a scanning circuit (SC) for sequentially driving the switching elements through their control terminals, characterised by first common connecting means ($SL_1$) for connecting output terminals of odd numbered switching elements to each other, second common connecting means ($SL_2$) for connecting output terminals of even numbered switching elements to each other, first reading gate means ($G_1$) having an output terminal and an input terminal connected to the first common connecting means, first re-set gate means ($RG_1$) having an output terminal and an input terminal connected to the first common connecting means, second reading gate means ($G_2$) having an output terminal and an input terminal connected to the second common connecting means, second re-set gate means ($RG_2$) having an output terminal and an input terminal connected to the second common connecting means, third common connecting means ($SL_3$) for connecting the output terminals of the first and second reading gate means to each other, a signal output terminal (SIG) connected to the third common connecting means for outputting externally the detection signals, a re-set power source terminal connected to the output terminals of the first and second re-set gate means, and control means (CC) operative in synchronisation with the sequential driving of the switching elements for controlling the first and second reading gate means and the first and second re-set gate means so as to output sequentially through the signal output terminal the detection signals from the plurality of the photo-electric conversion elements while sequentially re-setting the photo-electric conversion elements.

# FIG. 1

PHOTOELECTRIC CONVERSION ELEMENT

$S_{2n}$  $S_{2n+1}$  $S_{2(n+1)}$  $S_{2(n+1)+1}$

SWITCHING ELEMENT $SW_{2n}$

$SW_{2n+1}$  $SW_{2(n+1)}$  $SW_{2(n+1)+1}$

$SL_1$ FIRST COMMON LINE

$SL_2$ SECOND COMMON LINE

$SL_3$ THIRD COMMON LINE

$G_1$

FIRST READING GATE

FIRST RESET GATE  $RG_1$

SECOND READING GATE  $G_2$

SECOND RESET GATE  $RG_2$

FLIPFLOP $FF_{2n}$  $FF_{2n+1}$  $FF_{2(n+1)}$  $FF_{2(n+1)+1}$

D Q  CLK

SIG SIGNAL OUTPUT TERMINAL

$RG_3$

THIRD RESET GATE

$Q_1$  $Q_2$

CLK CONTROL CIRCUIT  CC

SC SCANNING CIRCUIT

EP 0 393 945 A2

# FIG. 2

# FIG.3 PRIOR ART

EP 0 393 945 A2